**Europäisches Patentamt**

**European Patent Office**

**Office européen des brevets**

(19)

(11) Veröffentlichungsnummer: **0 306 755**
**B1**

# (12) EUROPÄISCHE PATENTSCHRIFT

(45) Veröffentlichungstag der Patentschrift:
23.05.90

(21) Anmeldenummer: 88113559.4

(22) Anmeldetag: 20.08.88

(51) Int. Cl.⁵: **B60H 1/00**

(54) Vorrichtun zum Heizen, Belüften und/oder Klimatisieren von Kraftfahrzeugen.

(30) Priorität: 08.09.87 DE 3730088

(43) Veröffentlichungstag der Anmeldung:
15.03.89 Patentblatt 89/11

(45) Bekanntmachung des Hinweises auf die Patenterteilung:
23.05.90 Patentblatt 90/21

(84) Benannte Vertragsstaaten:
BE ES FR IT NL

(56) Entgegenhaltungen:
DE-A- 3 223 812
GB-A- 730 723
US-A- 3 520 355
US-A- 3 522 839
US-A- 3 862 549

PATENT ABSTRACTS OF JAPAN, Band 11,
nr. 76 (M-569)[2523], 7. März 1987; &
JP-A-61 232 917 (TOSHIBA CORP.) 17-10-1986
PATENT ABSTRACTS OF JAPAN, Band 11,
Nr. 347 (M-641)[2794], 13. November 1987; &
JP-A-62 125 912 (TEITO KOUSOKUDO KOTSU
EIDAN) 08-06-1987

(73) Patentinhaber: AURORA Konrad G. Schulz GmbH & Co,
Südring 4, D-6933 Mudau/Odenwald(DE)

(72) Erfinder: Schulz, Joachim, Neudorfer Strasse 2,
D-8762 Amorbach(DE)

(74) Vertreter: Splanemann, Rainer et al, Patentanwälte
Dipl.-Ing. R. Splanemann Dr. B. Reitzner Dipl.-Ing. K.
Baronetzky Tal 13, D-8000 München 2(DE)

**Beschreibung**

Die Erfindung betrifft eine Vorrichtung zum Heizen, Belüften und/oder Klimatisieren von Kraftfahrzeugen, gemäß dem Oberbegriff von Anspruch 1 (siehe US-A 3 520 355 oder JP-A 61 232 917).

Mit einer derartigen Anordnung werden über lange Druckluftleitungen, die sich an den Längsaußenseiten des Kraftfahrzeugs, beispielsweise eines Omnibusses, entlang erstrecken, die von der Vorrichtung fernen Bereiche des Omnibusses belüftet. Die Kanäle müssen daher mit ziemlich viel Luft beaufschlagt werden, wozu starke und laute Gebläse erforderlich sind.

Daher sind Versuche unternommen worden, über mehrere Verdampfer, Wärmetauscher und Gebläse eine ausreichende Klimatisierungsleistung für die gesamte Buslänge bereitzustellen. Bei derartigen im Dachbereich angeordneten Klimaanlagen wird jedoch der Gepäckraum so stark beschnitten, daß diese Anlagen nicht in die Praxis Eingang gefunden haben. Um diesen Nachteil zu beheben, hat man Klimaanlagen entweder im Heck oder im Bug des Omnibusses angeordnet, wobei Verdampfer und Wärmetauscher angesichts der starken erforderlichen Luftströmung ungünstig betrieben wurden.

Um die Strömungswiderstände dementsprechend möglichst gering zu halten, hat man auf Umlenkungen verzichtet, und die Zuluftkanäle - sowohl für die Frischluft als auch für die Umluft - in der Verlängerung des Druckkanals, d.h. in Kraftfahrzeuglängsrichtung, ausgebildet.

Demgegenüber ist es Aufgabe der Erfindung, eine Vorrichtung zum Heizen, Belüften und/oder Klimatisieren von Kraftfahrzeugen gemäß dem Oberbegriff von Anspruch 1 zu schaffen, die trotz der Verwendung leiser und kleiner Gebläse große Leistungen und zudem eine preisgünstige Fertigung ermöglicht.

Diese Aufgabe wird erfindungsgemäß durch Anspruch 1 gelöst. Vorteilhafte Weiterbildungen ergeben sich aus den Unteransprüchen.

Zu den erfindungsgemäß erzielbaren Vorteilen gehört zunächst die Bereitstellung großer Luftmengen ohne große Gebläseleistung. Hierzu wird ein langgestreckter Saugraum ausgebildet, an dessen Stirnseiten je Gebläse vorgesehen sind. Der Saugraum weist einen Wärmetauscher bzw. Verdampferelemente auf, der bzw. die ebenfalls langgestreckt ist. Der Wärmetauscher bzw. das Verdampferelement kann dann ganz langsam von Luft mit geringer Strömungsgeschwindigkeit durchtreten werden, so daß sich ein sehr guter Wärmeübergang ergibt und dennoch der Strömungswiderstand sehr klein ist. Besonders günstig ist es dann, daß die Umlenkung der Saugluft um 90° in einem Bereich sehr geringer Strömungsgeschwindigkeit erfolgt.

Durch die in Längsrichtung des Kraftfahrzeugs gesehenen mittig angeordneten und den Saugraum begrenzenden Gehäuse der Vorrichtung sind die Druckleitungen vergleichsweise kurz. Aufgrund der besonderen Ausbildung stört die erfindungsgemäße Vorrichtung überraschend auch dann nicht, wenn sie gepäcknetznah im Dachbereich angeordnet ist.

Bei Verwendung eines Verdampfers ist es besonders günstig, die beiden gegenüberliegenden Längswände des Gehäuses durch je ein Verdampferelement zu bilden. Dadurch lassen sich große Kühlleistungen auf geringstem Raum gewichtsgünstig erzielen. Beide Verdampferelemente können eine gemeinsame Kondenswasserwanne haben. Aufgrund der Anordnung der Gebläse an den Stirnseiten des sich in Fahrzeuglängsrichtung erstreckenden Gehäuses kann die klimatisierten Druckluft ungehindert voll in die 5m langen Luftkanäle einströmen. Diese Luftkanäle weisen dann in an sich bekannter Weise verteilte Düsen auf, so daß der Druck sich nach vorne bzw. zum Heck hin langsam abbaut. Dort sind die Luftkanäle dann jeweils um 90° abgebogen und laufen aufeinander zu, um die Front- bzw. die Heckscheibe zu beaufschlagen. Insgesamt läßt sich somit ein Ringkanal erreichen. Bei einer Busbreite von 2,50m, einer Buslänge von 11m und einer Gehäuselänge von 1,20m hat demnach jedes Gebläse knapp 5m in Längsrichtung sowie 1,25m in seitlicher Richtung zu beaufschlagen. Bei gleichverteilter Abgabe aus dem Luftkanal sind so lediglich 20 bis 25% der das Gebläse durchtretenden Luftmenge vorne bzw. hinten umzulenken, so daß dort der Strömungsquerschnitt gering sein kann und der Druckluftkanal dort sehr flach baut.

Besonders günstig ist ferner das Absaugen der verbrauchten Luft sowohl von der Scheiben- als auch von der Mittelgangseite her über die nebeneinander angeordneten Verdampferelemente, so daß keine Brauchluftnester entstehen können.

Die Kühlwirkung der Klimaanlage ist aufgrund der besonderen Luftverteilung und der Anordnung von zwei Verdampferelementen sehr gut.

Da die beiden Verdampferelementen gemeinsame Kondenswasserwanne als Montagebasis verwendet werden kann, ist die Herstellung kostengünstig möglich, zumal zwei Gehäusewände und ein Einspritzventil für den Verdampfer einsparbar sind.

Auch bei Verwendung der erfindungsgemäßen Vorrichtung für eine verdampferfreie Anlage lassen sich die gleichen montagetechnischen und lufttechnischen Vorteile erzielen. Der Wärmetauscher kann dann günstig an einer Konsole vormontiert werden, die sowohl von der Frischluft als auch von der Umluft durchtreten wird. Der Frischluft- und der Umluft-Eingangskanal erstrecken sich quer zur Längsrichtung des Kraftfahrzeugs unmittelbar vor dem Wärmetauscher, der ebenfalls langgestreckt ist und somit zu geringen Strömungsgeschwindigkeiten führt.

Wahlweise ist es auch möglich, sowohl ein Verdampferelement-Paar als auch einen zusätzlichen Wärmetauscher für Heizzwecke vorzusehen. Die Verdampferelemente und der Wärmetauscher erstrecken sich dann je längs des Gehäuses, so daß die Luft immer seitlich bzw. von oben in das Gehäuse eintritt und dort mit geringer Strömungsgeschwindigkeit umgelenkt werden kann. In dieser Ausführungsform ist es zusätzlich erforderlich, Schaltglieder wie Klappen vorzusehen, mit denen zwischen Heizen und Kühlen umgeschaltet werden kann.

Hinsichtlich der Luftzuführung zu der erfindungsgemäßen Vorrichtung ist es besonders vorteilhaft, wenn Frischluft- und Umluft-Eingangsklappen oder -schieber vorgesehen sind, mit denen die Eintrittsquerschnitte für die Zuluft derart regelbar sind, daß die Summe aus Frischluft und Umluft stets konstant bleibt.

Die Wirkung der erfindungsgemäßen Vorrichtung läßt sich besonders einfach durch Regelung der Gebläsedrehzahl über die für die Gebläse vorgesehenen Elektromotoren erreichen, wobei aber auch eine Temperatur- oder Durchströmregelung der Kühl- bzw. Heizflüssigkeit durch die Verdampfer bzw. den Wärmetauscher möglich ist.

Die Verdampferelemente können selbstverständlich auch als Wärmetauscher insbesondere eines sekundären Kühlkreislaufs ausgebildet sein.

Besonders günstig bei der unmittelbaren Verwendung der Verdampferelemente ist es, wenn ein Einspritzventil für beide Verdampferelemente einer Vorrichtung verwendet wird.

Weitere Einzelheiten, Vorteile und Merkmale der Erfindung sind in der nachfolgenden Beschreibung zweier Ausführungsbeispiele näher erläutert.

Es zeigen:

Fig. 1 die Anordnung einer Ausführungsform der Vorrichtung in einem Omnibus schematisch in Draufsicht;

Fig. 2 die Anordnung gemäß Fig. 1 schematisch in Seitenansicht;

Fig. 3 eine vergrößerte Darstellung einer Ausführungsform der Vorrichtung schematisch in Draufsicht;

Fig. 4 einen Querschnitt der Vorrichtung gemäß Fig. 3 im Einbauzustand;

Fig. 5 einen Längschnitt einer weiteren Ausführungsform der Vorrichtung.

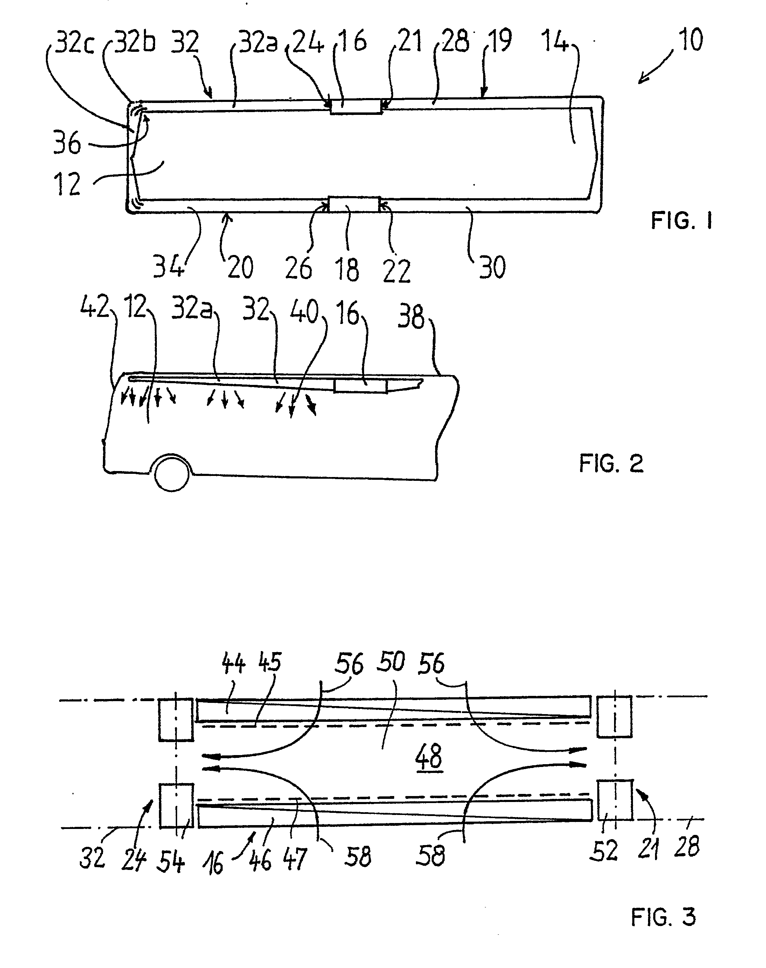

In Fig. 1 sind die Außenabmessungen eines Omnibusses 10 schematisch von oben gesehen dargestellt. Der Omnibus hat eine Frontpartie 12 und eine Heckpartie 14, zwischen denen ziemlich genau in der Mitte erfindungsgemäße Vorrichtungen 16 und 18 angeordnet sind. Die Vorrichtungen 16 und 18 befinden sich vergleichsweise nah an den Seitenwänden 19 und 20 des Omnibusses 10 und sind unmittelbar unterhalb des Dachs 38 des Omnibusses 10 befestigt, wie es aus Fig. 2 besser ersichtlich ist.

Die Vorrichtungen 16 und 18 weisen je zwei Gebläse 52, 54, gegebenenfalls einen Wärmetauscher und/oder zwei Verdampfer 44, 46 auf, denen jeweils Filter 45, 47 zugeordnet sein können. Die Gebläse 52 sowie 54 befinden sich an den hinteren Stirnseiten 21 und 22 sowie an den vorderen Stirnseiten 24 und 26 der Vorrichtungen 16 und 18. Jedes Gebläse ist an einen Druckluftkanal angeschlossen. Ein Druckluftkanal 28 erstreckt sich von der Stirnseite 21 zur Heckpartie 14 des Omnibusses 10. Ein Druckluftkanal 30 erstreckt sich von der Stirnseite 22 zur Heckpartie 14. Ein Druckluftkanal 32 erstreckt sich von der Stirnseite 24 zur Frontpartie 12, und ein Druckluftkanal 34 erstreckt sich von der Stirnseite 26 zur Frontpartie 12.

Alle Druckluftkanäle 28 bis 34 sind im wesentlichen gleich und zueinander symmetrisch ausgebildet. Die Ausbildung eines Druckluftkanals wird anhand des Druckluftkanals 32 beschrieben. Der Druckluftkanal 32 verläuft von der Stirnseite 24 ausgehend parallel zu der Seitenwand 19 unmittelbar unter dem Dach des Omnibusses 10, wie es aus Fig. 2 besser ersichtlich ist. In dem seitenwandparallelen Abschnitt 32a des Druckluftkanals 32 ist der Druckluftkanal 32 zur Frontpartie 12 hin vertikal verjüngt, wie es in Fig. 2 ersichtlich ist. Die horizontale Breite des Druckluftkanals 32 ist in dem seitenwandparallelen Abschnitt 32a konstant. Unmittelbar vor der in Fig. 2 dargestellten Frontscheibe des Omnibusses ist der Druckluftkanal 32 in einem Bogenabschnitt 32b horizontal zur Fahrzeugmitte, in Richtung der Längsachse des Omnibusses 10 gesehen, um ca. 90° umgelenkt und verläuft dort in einem frontscheibenparallelen Abschnitt 32c ebenfalls in Dachnähe. In dem Bogenabschnitt 32b sind an sich bekannte Luftleitbleche 36 zur Vermeidung von Sekundärwirbeln vorgesehen. Die vertikale Höhe des Druckluftkanals 32 ist in dem Bogenabschnitt 32b und dem frontscheibenparallelen Abschnitt 32c konstant, denn die vertikale Verjüngung endet an dem Bogenabschnitt 32b. Der frontscheibenparallele Abschnitt 32c ist horizontal zur Fahrzeugmitte hin verjüngt. In der Fahrzeugmitte - in der Längsachse des Omnibusses 10 - trifft der Druckluftkanal 32 mit dem Druckluftkanal 34 zusammen, der gegenüber dem Druckluftkanal 32 bezogen auf die Fahrzeuglängsachse symmetrisch ausgebildet ist. Der Durchmesser des Druckluftkanals am Ende des frontseitenparallelen Abschnitts 32c beträgt nur noch einen Bruchteil des Durchmessers des Druckluftkanals 32 an der Stirnseite 24. Die Druckluftkanäle können an ihren freien Enden - gegebenenfalls über Verengungen - miteinander verbunden sein. Sollen die beiden Fahrzeugseiten unterschiedlich beheiz- bzw. klimatisierbar sein, müssen die Druckluftkanäle 28 und 30 bzw. 32 und 34 an den freien Enden getrennt sein.

In Fig. 2 ist die Ausbildung des Druckluftkanals 32, von der Seite her dargestellt, ersichtlich. Gleiche Bezugszeichen deuten hier wie auch in den weiteren Figuren auf gleiche Teile hin. Die Vorrichtung 16 ist unmittelbar unterhalb eines Dachs 38 des Omnibusses 10 angeordnet. Auch der Druckluftkanal 32 ist unmittelbar unterhalb des Dachs 38 angeordnet und verläuft über seine gesamte Länge parallel zu diesem. Über seine ganze Länge weist der Druckluftkanal 32 Luftaustrittsöffnungen auf, die im wesentlichen gleich verteilt sind und die Belüftung, Heizung und/oder Klimatisierung des Omnibusses bzw. der Fahrgastplätze ermöglichen. Der Luftaustritt erfolgt dabei auch seitlich schräg nach unten, so daß alle Fahrgäste gleichmäßig mit klimatisierter Luft versorgt werden können. Dies ist mit den Pfeilen 40 angedeutet. Eine Frontscheibe 42 wird zusätzlich mit besonderen Düsen versorgt, die in dem frontscheibenparallelen Abschnitt 32c des Druckluftkanals 32 vorgesehen sind.

Bei einer Gesamtlänge des Busses von 11 m und einer Länge der Vorrichtung 16 und 18 von 1,20 m ist daher der seitenwandparallele Abschnitt 32a ca. 5 m lang. Bei einer Breite des Omnibusses 10 von 2,5 m ist der frontscheibenparallele Abschnitt 32c ca.

1,25m lang. Damit ergibt sich eine Gesamtlänge eines Druckluftkanals 32 von 6,25m. Bei gleich verteilter Luftabgabe über den Druckluftkanal 32 beträgt die Luftmenge, die den Bogenabschnitt 32b durchtritt, etwa ein Fünftel der gesamten Luftmenge. Der Druckluftkanal 32 ist an der Stirnseite 24 bei einer Luftleistung von 1000 m³/h 300mm breit und 200mm hoch. Die Breite bleibt über den ganzen seitenwandparallelen Abschnitt 32a konstant, während die Höhe zum Bogenabschnitt 32b hin auf 50mm abnimmt. Der frontscheibenparallele Abschnitt 32c ist unmittelbar an dem Bogenabschnitt 32b 300mm breit und 50mm hoch. Während die Höhe unverändert bleibt, nimmt die Breite bis zum Treffpunkt mit dem Druckluftkanal 34 auf 100mm ab.

Besonders vorteilhaft ist hierbei die Flachbauweise des erfindungsgemäßen Druckluftkanals in der Frontpartie, da die heutigen Frontscheiben 42 nach Möglichkeit groß konstruiert werden.

Falls dies wünschenswert ist, kann durch Verkleinerung des Strömungsquerschnitts eines Druckluftkanals 32 an der Stirnseite 24 eine Erhöhung der Strömungsgeschwindigkeit erzielt werden, die zwar ein druckstärkeres Gebläse erfordert, wobei jedoch die Strömung weiter "trägt", so daß auch für die Frontpartie 12 erhebliche Luftmengen zur Verfügung stehen.

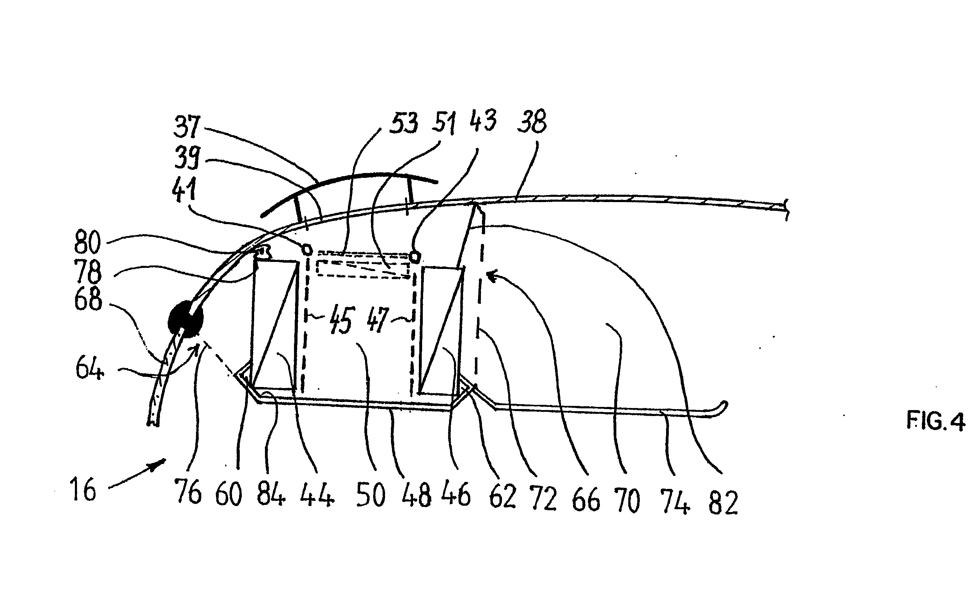

In Fig. 3 ist der schematische Aufbau einer erfindungsgemäßen Vorrichtung in der Draufsicht dargestellt. Diese Ausführungsform der erfindungsgemäßen Vorrichtung 16 weist zwei Verdampferelemente 44 und 46 auf, die die Seitenwände der Vorrichtung 16 in Längsrichtung des Omnibusses 10 bilden. Die Verdampferelemente 44 und 46 stehen in einer Bodenwanne 48, deren Querschnitt aus Fig. 4 ersichtlich ist. Zwischen den Verdampferelementen 44 und 46 befindet sich der Saugraum 50, der oben von dem Dach 38 des Omnibusses 10 abgeschlossen ist. An den beiden Enden oder Stirnseiten 21 und 24 der Vorrichtung 16 sind Doppelradialgebläse 52 und 54 angeflanscht, die die Luft aus dem Saugraum 50 saugen und die Druckluftkanäle 28 und 32 mit Druckluft beaufschlagen. Das Doppelradialgebläse 52 saugt die Luft, die die Verdampferelemente 44 und 46 durchtreten hat und dabei gekühlt worden ist, aus dem Saugraum 50 in gerader Richtung an. Die Luft strömt dabei gemäß Pfeilen 56 und 58. Wichtig ist, daß die Umlenkung des Luftstroms um 90° im Bereich extrem geringerer Strömungsgeschwindigkeit erfolgt, so daß hierbei praktisch keine Verluste entstehen. Der gekühlte Luftstrom wird in dem Gebläse stark beschleunigt.

Innerhalb des Saugraums 50 ist die Strömungsgeschwindigkeit der Luft in Saugraumlängsrichtung in der Nähe der Gebläse am stärksten und in der Mitte zwischen den Gebläsen relativ gering. Auch an der Gebläseeintrittsstelle ist jedoch die Strömungsgeschwindigkeit erheblich geringer als bei den bislang üblichen Omnibus-Klimaanlagen, die vom Heck aus die gesamte Länge des Omnibusses versorgen sollten.

Bei der gewählten und angegebenen Bemaßung können beispielsweise 1000 m³/h durch das Gebläse gefördert und hierzu auf die Luftgeschwindigkeit von 12 bis 15 m/s am Auslaß des Doppelradialgebläses 52 beschleunigt werden. Dennoch ergeben sich beim Durchtreten der Verdampferelemente und entsprechend beim Umlenken des Luftstroms im Saugraum nur Strömungsgeschwindigkeiten von 2,5 m/s oder noch erheblich weniger.

Der Saugraum ist lediglich 200mm breit, so daß die Verdampferelemente 44 und 46 nahe beieinander angeordnet sind und die Kühlleistung auf kleinstem Raum erzielt wird. Zusätzlich besteht der Vorteil, daß ein gemeinsames Einspritzventil für die beiden Verdampferelemente 44 und 46 verwendet werden kann.

In Fig. 3 ist die Anordnung der Verdampferelemente 44 und 46 auf der Bodenwanne 48 dargestellt. Beiden Verdampferelementen 44 und 46 dient die Bodenwanne 46 gemeinsam als Kondenswasserwanne. Zusätzlich kann die Bodenwanne aber auch als Montagebasis für die Verdampferelemente 46 und 48 sowie für die Doppelradialgebläse 52 und 54 dienen. Hierzu ist die Bodenwanne 48 an beiden Längsseiten bei 60 und 62 und nach oben innen abgebogen.

In der Verlängerung der Bodenwanne 48 sind beidseitig der erfindungsgemäßen Vorrichtung 16 Umluft-Einlaßöffnungen 64 und 66 angeordnet, wobei die Umluft-Einlaßöffnung 64 verbrauchte Luft aus dem Bereich eines Seitenfensters 68 ansaugt, während die Umluft-Einlaßöffnung 66 mit dem Gepäckfach 70 in Strömungsverbindung steht.

Dementsprechend wird sowohl von der Fensterseite als auch von der Mittelgangseite her die verbrauchte und erwärmte Luft angesaugt. Zugleich dient ein an den Umluft-Einlaßöffnungen 66 vorgesehenes Gitter oder Netz 72 dem Schutz des Verdampferelementes 46 gegen Beschädigung durch Gepäckstücke in dem Gepäckfach 70, die auf einer Gepäckablage 74 abgelegt sind.

Die Umluft-Eintrittsöffnungen 64 sind mit einem ähnlichen Gitter oder Netz 76 versehen, das sich von der Bodenwanne 48 zu der Oberkante des Seitenfensters 68 erstreckt. Dementprechend sind die Umluft-Einlaßöffnungen 64 nach unten und außen ausgerichtet. Diese Anordnung hat den Vorteil, daß der Lichteintritt für den Fahrgast wie auch das Sichtfeld des Fahrgasts nach oben hin nicht beeinträchtigt wird.

Das Dach 38 des Omnibusses 10 ist zur Seite hin in der Regel leicht abfallend oder abgerundet. Daher legt die obere äußere Kante des äußeren Verdampfers die Lage der erfindungsgemäßen Vorrichtung 16 fest. Diese Kante 78 ist über ein Dichtelement 80 an dem Dach 38 bzw. an dessen Isolierung abgestützt. Hierdurch wird auch das Einleiten von Karosserieschwingungen in das Verdampferelement 44 verhindert.

Aufgrund des Höhenunterschiedes des Dachs zwischen dem äußeren Verdampfer 44 und dem inneren Verdampfer 46 reicht die Verwendung eines Dichtelementes oben an dem Verdampfer 46 nicht aus; vielmehr ist ein Abschlußblech 82 vorgesehen, das den Raum zwischen dem Verdampferelement 46 und dem Dach 38 abschließt.

Mit dieser Anordnung sind die beiden Verdampferelemente 44 und 46 auf der gleichen Höhe angeordnet, so daß die Wanne 48 waagerecht ist und das sich sammelnde Kondenswasser großflächig aufgenommen werden kann.

Bei noch vermindertem Platzangebot kann der innere Verdampfer 46 auch leicht hochgeschwenkt werden, so daß die Bodenwanne 48 leicht schräg angeordnet ist und sich das Kondenswasser innen an der äußeren unteren Ecke 84 der Bodenwanne 48 sammelt. Vorzugsweise kann dann oberhalb des Verdampferelementes 46 ein nicht dargestelltes, dem Dichtelement 80 entsprechendes Gummiprofil als Dichtelement Anwendung finden.

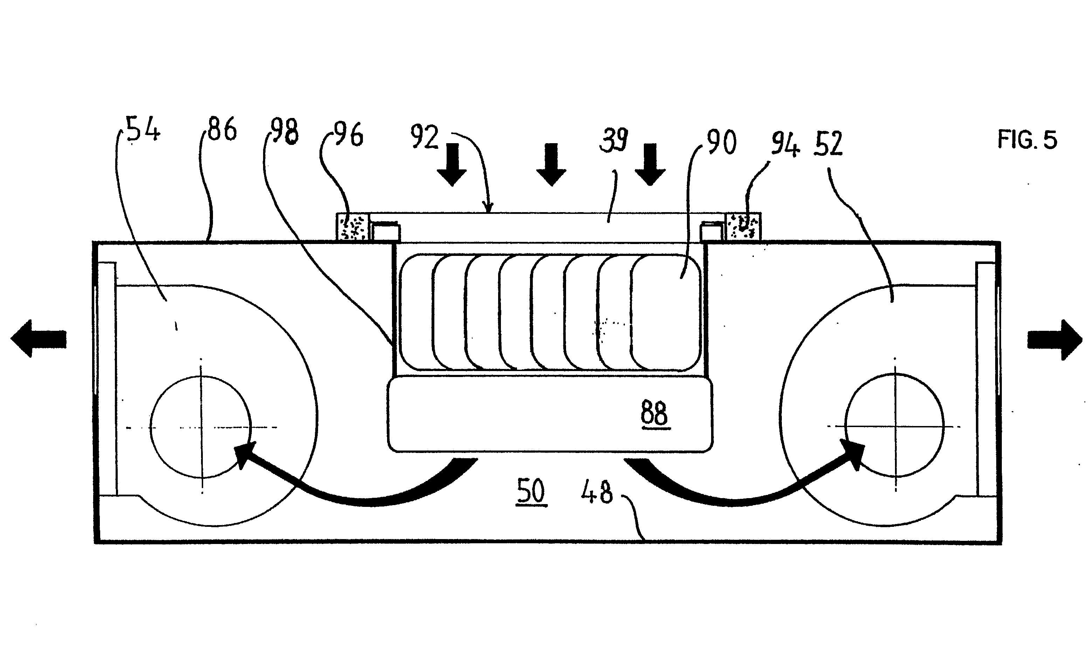

Bei der Ausführungsform gemäß Fig. 5 sind die Doppelradialgebläse 52 und 54 innerhalb des Gehäuses 86 der Vorrichtung 16 angeflanscht. Für diese einfachere und billigere Ausführungsform kommt auch ein Einfach-Radialgebläse in Betracht. Anstelle der Verdampferelemente 44 und 46 ist ein Wärmetauscher 88 derart angeordnet, daß die diesen durchtretende Luft mit geringer Strömungsgeschwindigkeit um 90° im Saugraum 50 umgelenkt und dann durch die Gebläse 52 und 54 beschleunigt werden kann. Zusätzlich ist eine Umluft-Klappenanordnung 90 vorgesehen, die die Zuführung von Umluft von der Fensterseite und/oder der Mittelgangseite her ermöglicht. Ein Frischlufteingang 92 läßt sich mit einer entsprechenden, flach liegenden und nicht dargestellten Frischluft-Klappenanordnung einschalten, wobei der Frischlufteingang als Durchbrechung 39 des Dachs 38 des Omnibusses ausgelegt ist. Die Abdichtung zwischen der Karosserie mit dem Frischlufteingang und dem Gehäuse 86 erfolgt über die Dichtungen 94 und 96, an denen entsprechende Karosseriefalze anliegen können.

Die in Fig. 5 dargestellte Ausführungsform der Vorrichtung ist leicht und zudem preisgünstig herzustellen, da der Wärmetauscher 88 an einem Rahmen oder einer Konsole 98 für die Umluft-Klappenanordnung 90 vormontiert und zusammen mit dieser in das Gehäuse 86 eingeführt und dort fertig montiert werden kann. Wahlweise ist es auch möglich, wechselseitig steuerbare Klappenanordnungen für die Frischluft und die Umluft zu verwenden, indem nämlich stufenlos geregelt das Mischungsverhältnis zwischen Umluft und Frischluft bei konstanter Gesamt-Zuluftmenge einstellbar ist. Beispielsweise können hierzu die Klappenanordnungen 90 für die Umluft und die im Winkel von ca. 90° hierzu angeordneten und nicht dargestellten Klappenanordnungen für die Frischluft mechanisch miteinander verbunden sein.

Gemäß Fig. 4 können sich die Filter 45 bzw. 47 im wesentlichen lotrecht entlang der ganzen Höhe der hochkant stehenden Verdampferelemente 44 bzw. 46 erstrecken und nach unten und oben leicht über die Verdampferelemente 44 bzw. 46 hinausreichen. Unterhalb der Verdampferelemente und diese haltend ist die Kondenswasserwanne 48 angeordnet. Die Filter 45 und 47 enden knapp oberhalb der den Saugraum 50 nach unten begrenzenden Innenfläche der Kondenswasserwanne 48. Im Betrieb ist die Innenfläche in der Regel zumindest teilweise mit Kondenswasser bedeckt, so daß die Filter 45 und 47 im Kondenswasser hängen. Die Filter 45 und 47 sind ferner seitlich, d.h. hinter und vor der Zeichnungsebene in Führungen gehalten, was nicht dargestellt ist.

Da die Filter 45 und 47 aus lockerem Gewebe oder wirr angeordneten Fasern bestehen, würden sie ohne besondere Maßnahmen kollabieren. Um dies zu verhindern, können die Filter in den Führungen seitlich eingespannt sein. Die Filter 45 bzw. 47 weisen oben je einen Griff 41 bzw. 43 auf.

Soll die Vorrichtung bei diesem Ausführungsbeispiel auch zum Beheizen ausgelegt sein, so ist der Saugraum 50 nach oben hin von einem Wärmetauscher 51 begrenzt und weist eine verstellbare Klappenanordnung 53 auf, die das wahlweise Zuführen von Frischluft und Umluft in stufenloser Mischung zu dem Saugraum 50 (Heizungs- bzw. Lüftungsbetrieb) erlaubt.

Die Frischluft wird über die Dachdurchbrechung 39 zugeführt bzw. angesaugt, die durch eine Haube 37 abgedeckt ist, die sich seitlich weit über die Dachdurchbrechung 39 hinaus erstreckt und eine strömungsgünstige Außenfläche aufweist.

Die Befestigung der Haube 37 auf dem Dach 38 ist lösbar, so daß ein Austausch der Filter 45 und 47 leicht erfolgen kann.

Ferner ist es möglich, das Gehäuse 86 komplett in Kunststoff vorzufertigen, dann die Radialgebläse 52 und 54 durch die für die Klappenanordnungen bzw. den Wärmetauscher in dem Gehäuse oben vorgesehene Öffnung einzuführen und innen an den Stirnseiten 24 und 21 des Gehäuses zu montieren und dann schließlich die vormontierte Wärmetauscher-Klappenanordnungseinheit einzubringen, so daß die gesamte Einheit vom Karosseriebauer kompakt eingebaut werden kann.

Zusätzlich können bei der Ausführungsform gemäß Fig. 5 seitlich des langgestreckten Saugraums 50 die Verdampferelemente 44 und 46 vorgesehen sein, wobei der Luftdurchtritt durch diese dann jedoch durch zusätzliche Klappen zu regeln ist.

Ferner können die Bodenwanne 48, das Abschlußblech 82 sowie ggf. weitere Teile des Gehäuses 86 aus nicht-metallischen Werkstoffen, wie Holz, holzhaltigem Preßstoff, insbesondere Preßspan, bestehen. Dies führt neben Kostenvorteilen zu einer Absenkung des durch die Gebläse verursachten Geräuschpegels.

Die Druckluftkanäle 28, 30, 32 und 34 können ebenfalls aus holzhaltigen Preßstoffen bestehen, wobei insbesondere bei der Ausbildung Druckluftkanäle 28, 30, 32 und 34 aus Stahlblech eine Auskleidung durch Polyurethan-Schaum in Betracht kommt.

## Patentansprüche

1. Vorrichtung zum Heizen, Belüften und/oder Klimatisieren von Kraftfahrzeugen, insbesondere von Omnibussen, die ein Gehäuse und an dem Gehäuse angeordnete Gebläse aufweist, wobei das Gehäuse einen gemeinsamen Saugraum für das Gebläse bildet und die Gebläse (52, 54) der Vorrichtung an Druckluftkanäle (28, 32; 30, 34) angeschlossen sind, dadurch gekennzeichnet, daß die Gebläse (52, 54) je an den Stirnseiten (21, 22, 24, 26) des langgestreckt ausgebildeten Gehäuses angeordnet sind, daß mindestens eine von zwei gegenüberliegenden Längswänden des Gehäuses ein Wärmetauscherelement (44, 46) aufweist und daß sich die Druckluftkanäle (28, 32, 30, 34) der Vorrichtung im wesentlichen umlenkungsfrei und unmittelbar an die Gebläse (52, 54) anschließen.

2. Vorrichtung nach Anspruch 1, dadurch gekennzeichnet, daß zwei Gebläse (52, 54) an den Stirnseiten (21, 22, 24, 26) des Gehäuses befestigt sind und die Vorrichtung (16, 18) in Längsrichtung des Kraftfahrzeugs gesehen an einer dem Verhältnis der Leistung der Gebläse (52, 54) entsprechenden Stelle, insbesondere mittig in dem Kraftfahrzeug, angeordnet ist.

3. Vorrichtung nach Anspruch 1 oder 2, dadurch gekennzeichnet, daß die Figurenachse des Gehäuses sich parallel zu der Längsrichtung des Kraftfahrzeugs erstreckt, daß zwei Gehäuse seitlich der Längsachse des Kraftfahrzeugs, insbesondere an den Außenseiten, vorgesehen sind und daß die Druckluftkanäle (28, 30, 32, 34) einen im wesentlichen umlaufenden Dachkanal bilden.

4. Vorrichtung nach einem der vorhergehenden Ansprüche, dadurch gekennzeichnet, daß das Gehäuse einen im wesentlichen quadratischen Innenquerschnitt aufweist.

5. Vorrichtung nach einem der vorhergehenden Ansprüche, dadurch gekennzeichnet, daß das Wärmetauscherelement als Verdampferelement (44, 46) ausgebildet ist.

6. Vorrichtung nach einem der vorhergehenden Ansprüche, dadurch gekennzeichnet, daß das eine Verdampferelement (44) seitenfensterseitig und das andere Verdampferelement (46) mittelgangseitig des Gehäuses angebracht ist.

7. Vorrichtung nach einem der vorhergehenden Ansprüche, dadurch gekennzeichnet, daß unterhalb der im wesentlichen hochkant angeordneten, relativ flachen Verdampferelemente (44, 46) eine Kondenswasserwanne (48) angeordnet ist, die sich unter beiden Verdampferelementen (44, 46) erstreckt.

8. Vorrichtung nach einem der vorhergehenden Ansprüche, dadurch gekennzeichnet, daß in dem die Verdampferelemente (44, 46) durchtretenden Luftstrom (56, 58) Filter (45, 47) angeordnet sind, die zugleich als Kondenswasserabscheider ausgebildet sind, wobei das Kondenswasser ebenfalls von der Kondenswasserwanne (48) aufgenommen wird.

9. Vorrichtung nach Anspruch 8, dadurch gekennzeichnet, daß das Dach (38) eine Durchbrechung (39) zum Auswechseln der Filter (45, 47) aufweist.

10. Vorrichtung nach Anspruch 9, dadurch gekennzeichnet, daß die Kondenswasserwanne (48) zugleich als Montageplatte für die beiden Verdampferelemente (44, 46) und für die Gebläse (52, 54) dient.

11. Vorrichtung nach Anspruch 10, dadurch gekennzeichnet, daß die obere Wand des Gehäuses von dem Dach (38) des Kraftfahrzeugs und die untere Wand von der Kondenswasserwanne (48) gebildet sind.

12. Vorrichtung nach einem der vorhergehenden Ansprüche, dadurch gekennzeichnet, daß sie im Dachbereich des Kraftfahrzeugs angeordnet ist und einen Frischluft- und einem Umluft-Eingangskanal aufweist, denen ein Wärmetauscher (88) nachgeschaltet ist, daß der Wärmetauscher (88) an einer Konsole (98) des Frischluft- und Umluft-Eingangskanals (92) montiert ist und sowohl der Frischluft- als auch der Umluft-Eingangskanal (92) quer zur Figurenachse des Gehäuses (86) verlaufen.

13. Vorrichtung nach einem der vorhergehenden Ansprüche, dadurch gekennzeichnet, daß der Frischlufteingang (92) von der Dachdurchbrechung (39) gebildet ist, die von einer Haube (37) abgedeckt und alternativ zu dem Umlufteingang verschließbar ist.

14. Vorrichtung nach einem der Ansprüche 12 oder 13, dadurch gekennzeichnet, daß Frischluft- und Umluft-Eingangsklappen vorgesehen sind, die wechselseitig regelbar sind, so daß der Gesamt Strömungswiderstand eingangsseitig des Wärmetauschers (88) konstant ist.

15. Vorrichtung nach einem der Ansprüche 12 bis 14, dadurch gekennzeichnet, daß die Gebläse (52, 54) mit ihren Druckstutzen innen an den Stirnseiten (21, 22, 24, 26) des Gehäuses (86) angeflanscht sind.

16. Vorrichtung nach einem der Ansprüche 12 bis 15, dadurch gekennzeichnet, daß die Luftaustrittsfläche des Wärmetauschers (88) sich quer zu den Eintrittsöffnungen der Gebläse (52, 54) mit vergleichsweise großem Querschnitt erstreckt.

17. Vorrichtung nach einem der vorhergehenden Ansprüche, dadurch gekennzeichnet, daß seitenfensterseitig und mittelgangseitig je Umluft-Eintrittsöffnungen für separat zumischbare Umluft beidseitig des Gehäuses (86) angeordnet sind.

18. Vorrichtung nach einem der vorhergehenden Ansprüche, dadurch gekennzeichnet, daß der zur Kühlung vorgesehene Teil der Wärmetauscherelemente (44, 46) Umluft-Eintrittsöffnungen (64, 66) und der zur Heizung vorgesehene Teil (88) Umluft-Eintrittsöffnungen und einen Frischluft-Eingangskanal aufweist, die wechselseitig steuerbar sind.

19. Vorrichtung nach einem der vorhergehenden Ansprüche, dadurch gekennzeichnet, daß die seitenfensterseitige Umluft-Eintrittsöffnung (64) schräg nach unten und außen ausgerichtet ist.

20. Vorrichtung nach einem der vorhergehenden Ansprüche, dadurch gekennzeichnet, daß das Gehäuse (86) und ggf. die Druckluftkanäle (28, 30, 32, 34) Holz, holzhaltigen Preßstoff, insbesondere Preßspan, od.dgl. aufweisen.

21. Vorrichtung nach einem der vorhergehenden Ansprüche, dadurch gekennzeichnet, daß die Druckluftkanäle (28, 30, 32, 34) innen schalldämmend ausgekleidet sind.

**Claims**

1. Means for heating, ventilating and/or air conditioning of motor vehicles, preferably but optionally buses, said means comprising a casing and a blower arranged on said casing, where the casing forms a common intake compartment for the blower and the blowers (52, 54) of said means are connected to pressurized air channels (28, 32; 30, 34) characterized in that the blowers (52, 54) are arranged on the end faces (21, 22, 24, 26) of the elongated casing, respectively, that at least one of two opposing elongated walls of said casing comprises a heat exchanger element (44, 46) and that the pressurized air channels (28, 32; 30, 34) are attached essentially free of deflection and immediately to said casing (52, 54).

2. Means according to claim 1, characterized in that two blowers (52, 54) are fixed on the end faces (21, 22, 24, 26) of the casing and that said means (16, 18) is arranged at a position regarded in the longitudinal direction of the motor vehicle, which corresponds to the relation of the power of the blowers (52), preferably in the centre of the motor vehicle.

3. Means according to claim 1 or 2, characterized in that the figure axis of the casing extends in parallel to the longitudinal direction of the motor vehicle, that two casings are provided laterally to the longitudinal axis of the motor vehicle, preferably at the outer sides, and that the pressurized air channels (28, 30, 32, 34) form a roof channel which is essentially peripheral.

4. Means according to one of the preceding claims, characterized in that the casing has an essentially square inner crosssectional area.

5. Means according to one of the preceding claims, characterized in that the heat exchanger element is established as an evaporator element (44, 46).

6. Means according to one of the preceding claims, characterized in that one evaporator element (44) is arranged on the side of the side window and the other evaporator element (46) is arranged on the side of the casing facing the aisle.

7. Means according to one of the preceding claims, characterized in that under the essentially up-end set, relatively flat evaporator element (44, 46), a water of condensation trough is arranged extending under both of said evaporator elements (44, 46).

8. Means according to one of the preceding claims, characterized in that filters (45, 47) are arranged in the air stream (56, 58) passing the evaporator elements (44, 46) serving simultaneously as water of condensation separators, where the water of condensation also is received by the water of condensation trough (48).

9. Means according to claim 8, characterized in that the roof (38) comprises a through-opening (39) for changing the filters (45, 47).

10. Means according to claim 9, characterized in that the water of condensation trough (48) simultaneously forms a mounting plate for both of the evaporator element (44, 46) and for the blowers (52, 54).

11. Means according to claim 10, characterized in that the upper wall of the casing is formed by the roof (38) of the motor vehicle, and the lower wall is formed by the water of condensation trough (48).

12. Means according to one of the preceding claims, characterized in that said means are arranged in the roof portion of said motor vehicle and comprise a fresh air and a recirculation air intake channel which are followed by a heat exchanger (88), that said heat exchanger (88) is mounted on a support (98) of said fresh air and recirculation air intake channel (92) and that both the fresh air and the recirculation air intake channel (92) run traverse to the figure axis of the casing (86).

13. Means according to one of the preceding claims, characterized in that the fresh air inlet (92) is formed by the roof through-opening (39) which is covered by a hood (37) and as an alternative to the recirculation air inlet can be closed.

14. Means according to one of the claims 12 or 13, characterized in that fresh air and recirculation air inlet flaps for being controlled mutually are provided such that the overall flow resistance at the input side of the heat exchanger (88) is constant.

15. Means according to one of the claims 12 to 14, characterized in that the blowers (52, 54) are mounted with a pressure sockets at the end faces (21, 22, 24, 26) of the casing (86) from the inner sides.

16. Means according to one of the claims 12 to 15, characterized in that the air outlet area of the heat exchanger (88) extends traverse to the inlet openings of the blowers (52, 54) and has a relatively large cross-section.

17. Means according to one of the preceding claims, characterized in that at the side of the side windows and at the side of the aisle, recirculation air inlet openings are provided for separately adding recirculation air on both sides of the casing (86).

18. Means according to one of the preceding claims, characterized in that the part of the heat exchanger elements (44, 46) intended for cooling comprises recirculation air inlet openings (44, 46) and that the part (88) intended for heating comprises recirculation air inlet openings and a fresh air intake channel which can be mutually controlled.

19. Means according to one of the preceding claims, characterized in that the recirculation air inlet opening (64) on the side of the side window is oriented obliquely downward and outward facing.

20. Means according to one of the preceding claims, characterized in that the casing and optionally the pressurized air channels (28, 30, 32, 34) comprise wood or moulding compound comprising wood, preferably press-board, or the like.

21. Means according to one of the preceding claims, characterized in that the pressurized air channels (28, 30, 32, 34) are covered internally sound-insulating.

**Revendications**

1. Dispositif de chauffage, de ventilation et/ou de climatisation de véhicules automobiles, en particulier d'autobus, comportant un boîtier et des ventilateurs disposés sur le boîtier, ledit boîtier formant une chambre d'aspiration commune pour les ventilateurs, lesdits ventilateurs (52, 54) du dispositif étant reliés à des canaux (28, 32; 30, 34) d'air de refoulement, caractérisé en ce que les ventilateurs (52, 54) sont disposés respectivement sur les côtés frontaux (21, 22, 24, 26) du boîtier de forme très allongée, en ce qu'au moins une des deux parois longitudinales du boîtier se faisant face présente un élément d'échangeur de chaleur (44, 46) et en ce que les canaux (28, 32; 30, 34) du dispositif se raccordent pour l'essentiel sans déviation et directement aux ventilateurs (52, 54).

2. Dispositif selon la revendication 1, caractérisé en ce que deux ventilateurs (52, 54) sont fixés sur les côtés frontaux (21, 22, 24, 26) du boîtier et en ce que le dispositif (16, 18) est mis en place, dans le sens longitudinal du véhicule automobile, à un emplacement correspondant au rapport de puissance des ventilateurs (52, 54), en particulier au milieu du véhicule automobile.

3. Dispositif selon l'une des revendications 1 et 2, caractérisé en ce que l'axe figuré du boîtier s'étend parallèlement au sens longitudinal du véhicule automobile, en ce que deux boîtiers sont prévus latéralement par rapport à l'axe longitudinal du véhicule automobile, en particulier sur les côtés extérieurs, et en ce que les canaux (28, 30, 32, 34) d'air de refoulement forment un canal de toit substantiellement périphérique.

4. Dispositif selon l'une quelconque des revendications précédentes, caractérisé en ce que le boîtier présente une coupe transversale interne substantiellement carrée.

5. Dispositif selon l'une quelconque des revendications précédentes, caractérisé en ce que l'élément d'échangeur de chaleur est réalisé sous la forme d'un élément d'évaporation (44, 46).

6. Dispositif selon l'une quelconque des revendications précédentes, caractérisé en ce qu'un des éléments d'évaporation (44) du boîtier est disposé du côté d'une fenêtre latérale et l'autre élément d'évaporation (46) est disposé du côté du couloir central.

7. Dispositif selon l'une quelconque des revendications précédentes, caractérisé en ce qu'une cuvette (48) d'eau de condensation est disposée au-dessous des éléments d'évaporation (44, 46) qui sont relativement plats et disposés substantiellement de chant, ladite cuvette (48) d'eau de condensation s'étendant sous les deux éléments d'évaporation (44, 46).

8. Dispositif selon l'une quelconque des revendications précédentes, caractérisé en ce que des filtres (45, 47) sont disposés dans le courant d'air (56, 58) qui traverse les éléments d'évaporation (44, 46), lesquels filtres sont réalisés en même temps sous la forme de séparateurs d'eau de condensation, laquelle est également réceptionnée dans la cuvette d'eau de condensation (48).

9. Dispositif selon la revendication 8, caractérisé en ce que le toit (38) présente une ouverture (39) pour changer les filtres (45, 47).

10. Dispositif selon la revendication 9, caractérisé en ce que la cuvette d'eau de condensation (48) sert à la fois de plaque de montage pour les deux éléments d'évaporation (44, 46) et pour les ventilateurs (52, 54).

11. Dispositif selon la revendication 10, caractérisé en ce que la paroi supérieure du boîtier est formée par le toit (38) du véhicule automobile et par la paroi inférieure de la cuvette d'eau de condensation (48).

12. Dispositif selon l'une quelconque des revendications précédentes, caractérisé en ce qu'il est disposé au niveau du toit du véhicule automobile et présente un canal d'entrée d'air frais et un canal d'entrée d'air de circulation, à l'arrière desquels est intercalé un échangeur de chaleur (88) en ce que l'échangeur de chaleur (88) est monté sur une console (98) du canal d'entrée (92) d'air frais et d'air de circulation et en ce que le canal d'entrée d'air frais ainsi que le canal d'entrée d'air de circulation (92) sont orientés perpendiculairement à l'axe figuré du boîtier (86).

13. Dispositif selon l'une quelconque des revendications précédentes, caractérisé en ce que l'entrée (92) d'air frais est formée par l'ouverture (39) du toit, laquelle est recouverte par une coiffe (37) et peut se fermer pour former, de façon alternée, l'entrée d'air de circulation.

14. Dispositif selon l'une des revendications 12 et 13, caractérisé en ce qu'il est prévu des clapets d'entrée d'air frais et d'air de circulation pouvant être réglés alternativement, de sorte que la résistance d'écoulement totale est constante au niveau de l'entrée de l'échangeur de chaleur (88).

15. Dispositif selon l'une quelconque des revendications 12 à 14, caractérisé en ce que les ventilateurs (52, 54) sont bridés par l'intérieur de leurs raccords de tuyaux de refoulement aux côtés frontaux (21, 22, 24, 26) du boîtier (86).

16. Dispositif selon l'une quelconque des revendications 12 à 15, caractérisé en ce que la surface de sortie d'air de l'échangeur de chaleur (88) s'étend perpendiculairement aux ouvertures d'admission des ventilateurs (52, 54) avec une section transversale comparativement grande.

17. Dispositif selon l'une quelconque des revendications précédentes, caractérisé en ce que, du côté des fenêtres latérales et du côté du couloir central, sont respectivement disposées des ouvertures d'entrée d'air de circulation, pour de l'air de circulation pouvant être mélangé séparément, des deux côtés du boîtier (86).

18. Dispositif selon l'une quelconque des revendications précédentes, caractérisé en ce que la partie des éléments d'échangeur de chaleur (44, 46) prévue pour le refroidissement présente des ouvertures (64, 66) d'entrée d'air de circulation et la partie (88) prévue pour le chauffage présente des ouvertures d'entrée d'air de circulation et un canal d'entrée d'air frais, qui peuvent être réglés alternativement.

19. Dispositif selon l'une quelconque des revendications précédentes, caractérisé en ce que l'ouverture (64) d'entrée d'air de circulation située du côté des fenêtres latérales est inclinée vers le bas et vers l'extérieur.

20. Dispositif selon l'une quelconque des revendications précédentes, caractérisé en ce que le boîtier (86) et, le cas échéant, les canaux (28, 30, 32, 34) d'air de refoulement comportent du bois, un matériau comprimé contenant du bois, en particulier du presspahn, ou l'équivalent.

21. Dispositif selon l'une quelconque des revendications précédentes, caractérisé en ce que l'intérieur des canaux (28, 30, 32, 34) d'air de refoulement comporte un revêtement amortissant le bruit.

FIG. I

FIG. 2

FIG. 3

FIG. 4

EP 0 306 755 B1

FIG. 5

EP 0 306 755 B1